**Europäisches Patentamt**

**European Patent Office**

**Office européen des brevets**

(11) Veröffentlichungsnummer: **0 184 620**
**B1**

(12) **EUROPÄISCHE PATENTSCHRIFT**

(45) Veröffentlichungstag der Patentschrift:
**22.03.89**

(21) Anmeldenummer: **85111858.8**

(22) Anmeldetag: **19.09.85**

(51) Int. Cl.⁴: **B 60 R 7/06,** B 60 R 7/04

(54) Verstauvorrichtung innerhalb von Verkleidungen in Kraftfahrzeugen.

(30) Priorität: **12.12.84 DE 3445211**

(43) Veröffentlichungstag der Anmeldung:
**18.06.86 Patentblatt 86/25**

(45) Bekanntmachung des Hinweises auf die Patenterteilung:
**22.03.89 Patentblatt 89/12**

(84) Benannte Vertragsstaaten:
**DE FR GB IT SE**

(56) Entgegenhaltungen:
**EP-A- 0 049 716**
**WO-A-82/02821**
**US-A- 2 883 234**
**US-A- 3 386 765**

(73) Patentinhaber: **FORD-WERKE AKTIENGESELLSCHAFT,**
**Ottoplatz 2 Postfach 21 03 69, D-5000 Köln 21 (DE)**

(84) Benannte Vertragsstaaten: **DE IT SE**

(73) Patentinhaber: **FORD MOTOR COMPANY LIMITED,**
**Eagle Way, Brentwood Essex CM13 3BW (GB)**

(84) Benannte Vertragsstaaten: **GB**

(73) Patentinhaber: **FORD FRANCE SOCIETE ANONYME,**
**344 Avenue Napoléon Bonaparte B.P. 307, F-92506 Rueil**
**Malmaison Cedex (FR)**

(84) Benannte Vertragsstaaten: **FR**

(72) Erfinder: **Zweiniger, Hansjürgen, Kastner Strasse 63,**
**D-5000 Köln 71 (DE)**
Erfinder: **Willenbrock, Horst, Goltsteinstrasse 90,**
**D-5000 Köln 51 (DE)**

(74) Vertreter: **Ritzkowsky, Harald, Dipl.-Ing., Ford-Werke**
**Aktiengesellschaft Patentabteilung**
**Z/DRR-2 Ottoplatz 2, D-5000 Köln 21 (DE)**

## Beschreibung

Die Erfindung bezieht sich auf eine Verstauvorrichtung innerhalb von Verkleidungen in Kraftfahrzeugen der im Oberbegriff des Patentanspruchs 1 erläuterten Art.

Aus der EP-A-0 049 716 ist bereits eine Verstauvorrichtung dieser Art bekannt.

Bei der bekannten Verstauvorrichtung sind innerhalb des Staubehälters parallel zu dessen Seitenwänden liegende Paare von Hebelarmen angeordnet, von denen zumindest ein Paar von Hebelarmen mit einer Feder- und Dämpfer-Anordnung zusammenwirkt.

Die bekannte Verstauvorrichtung weist hierbei den Nachteil auf, dass die seitlich innerhalb des Staubehälters angeordneten Paare von Hebelarmen die Unterbringungen von Gegenständen stören können bzw. sich mit eventuellen sperrigen Gegenständen verhaken können, wodurch die Benutzung und Funktion der Verstauvorrichtung beeinträchtigt wird.

Weiterhin ist der Bauaufwand verhältnismässig gross und der Staubehälter wird aus seiner geschlossenen Lage nur in eine Öffnungslage gebracht.

Die Aufgabe der Erfindung ist es, eine Verstauvorrichtung innerhalb von Verkleidungen in Kraftfahrzeugen der im Oberbegriff des Patentanspruchs 1 erläuterten Art derart zu verbessern, dass der Bauaufwand und die Funktionssicherheit der Verstauvorrichtung erhöht wird, indem nur eine unbedingt erforderliche Anzahl von Hebelarmen ausserhalb des Staubehälters vorgesehen wird und die Benutzung verbessert wird, indem eine kontrollierte Öffnungsbewegung mit zwei unterschiedlichen Öffnungslagen bereitgestellt wird.

Gemäss der Erfindung wird diese Aufgabe gelöst, indem eine Verstauvorrichtung gemäss dem Oberbegriff des Patentanspruchs 1 die im Kennzeichenteil des Patentanspruchs 1 aufgezeigten Merkmale aufweist.

In den weiteren Ansprüchen sind zweckmässige Massnahmen der Erfindung erläutert.

Dadurch, dass zwei vordere, seitlich äussere Hebelarme und ein hinterer, parallel zur etwa vertikalen Rückwand angeordneter, dreieckförmiger Hebelarm vorgesehen sind und eine Feder- und Kniehebel-Anordnung unten an einem Abstützbeschlag an der Verkleidung und oben an einer Querstrebe des dreieckförmigen Hebelarmes angreift, wird mit einem Minimum an ausserhalb des Staubehälters liegenden Hebelarmen die gewünschte Funktion der Verstauvorrichtung erreicht.

Die zum Festlegen der geschlossenen und der geöffneten Lage erforderlichen Anschläge sind hierbei einerseits durch übliche Anschlagpuffer für den Staubehälter und andererseits durch aussen an den Seitenwänden des Staubehälters eingeclipste Anschlagformteile gebildet, die mit Teilen der Verkleidung zusammenwirken.

Durch Massnahmen an der Feder- und Kniehebel-Anordnung und an den Anschlagformteilen werden zwei unterschiedlich festgelegte Öffnungsstellungen des Staubehälters bereitgestellt, eine geringe Öffnung, wie sie zum schnellen Weglegen von Gegenständen zweckmässig ist und eine volle Öffnungsstellung, wie sie für das Aufsuchen oder Ordnen von Gegenständen im Staubehälter zweckmässig ist.

Die Erfindung wird anhand eines in den beiliegenden Zeichnungen gezeigten Ausführungsbeispieles näher erläutert.

Es zeigt:

Fig. 1 einen vertikalen Schnitt durch eine Verstauvorrichtung innerhalb einer Verkleidung eines Kraftfahrzeuges und zwar eines Handschuhkastens im Armaturenbrett;

Fig. 2 eine Ansicht der Feder- und Kniehebel-Anordnung in ihrer Anordnung zwischen dem dreieckförmigen Hebelarm und dem an der benachbarten Verkleidung angeordneten Abstützbeschlag in Richtung des Pfeiles II in Fig. 1;

Fig. 3 einen Schnitt des dreieckförmigen Hebelarmes entlang der Linie III–III in Fig. 2;

Fig. 4 einen Schnitt des dreieckförmigen Hebelarmes entlang der Linie IV–IV in Fig. 2;

Fig. 5 einen Schnitt entlang der Linie IV in Fig. 1 und

Fig. 6 eine schematische Darstellung der Verstauvorrichtung in ihrer geschlossenen Lage (volle Linien), in ihrer gering geöffneten Lage (Strichpunkt-Linien) und in ihrer voll geöffneten Lage (gestrichelte Linien) mit den entsprechenden Lagen der Feder- und Kniehebel-Anordnung.

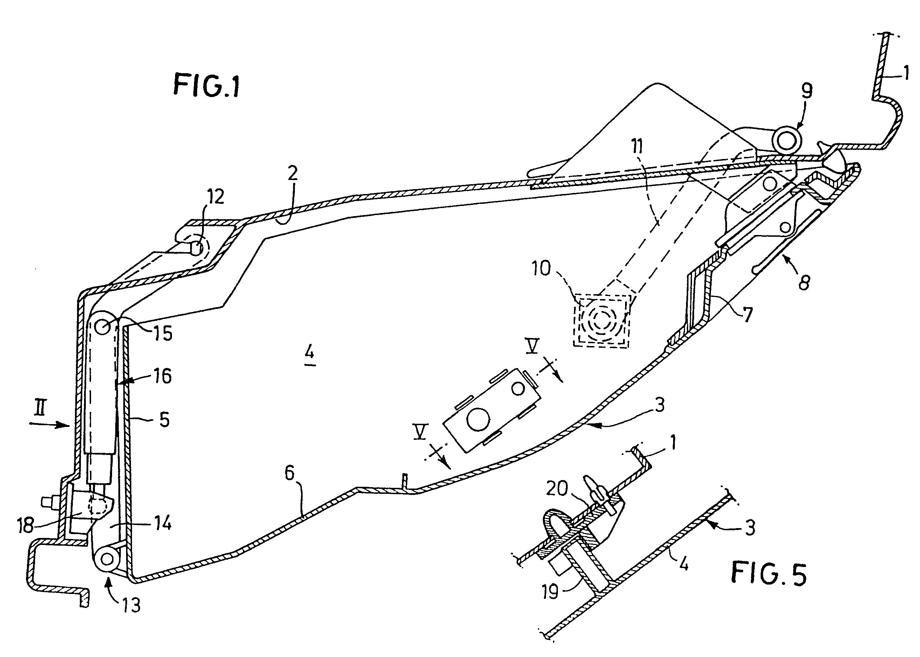

Bei der in Fig. 1 gezeigten Verstauvorrichtung in Form eines innerhalb des Armaturenbrettes eines Kraftfahrzeuges angeordneten Handschuhkastens weist die Armaturenbrett-Verkleidung 1 einen zurückspringenden Hohlraum 2 auf, der von einem zum Innern der Verkleidung hin offenen Staubehälter 3 ausgefüllt wird, der im wesentlichen aus zwei Seitenwänden 4, einer hinteren vertikalen Rückwand 5 und einer Vorderwand 6 besteht, die sich dem Verlauf der Verkleidung 1 bündig anschliesst. Die Vorderwand 6 des Staubehälters 3 weist in bekannter Weise eine Vertiefung 7 auf, in der eine in gestrichelten Linien grob angedeutete Betätigungs- und Schliessvorrichtung 8 angeordnet ist.

Der Staubehälter 3 ist über einenends an Lageranordnungen 9 an der Verkleidung 1 und anderenends an Lageranordnungen 10 an den Seitenwänden 4 des Staubehälters 3 angelenkten zwei vorderen, seitlich äusseren Hebelarmen 11 und über einen, einenends über eine Lageranordnung 12 an der Verkleidung 1 und anderenends an einer Lageranordnung 13 an der Rückwand 5 des Staubehälters 3 angelenkten hinteren dreieckförmigen Hebelarm 14 aufgehängt.

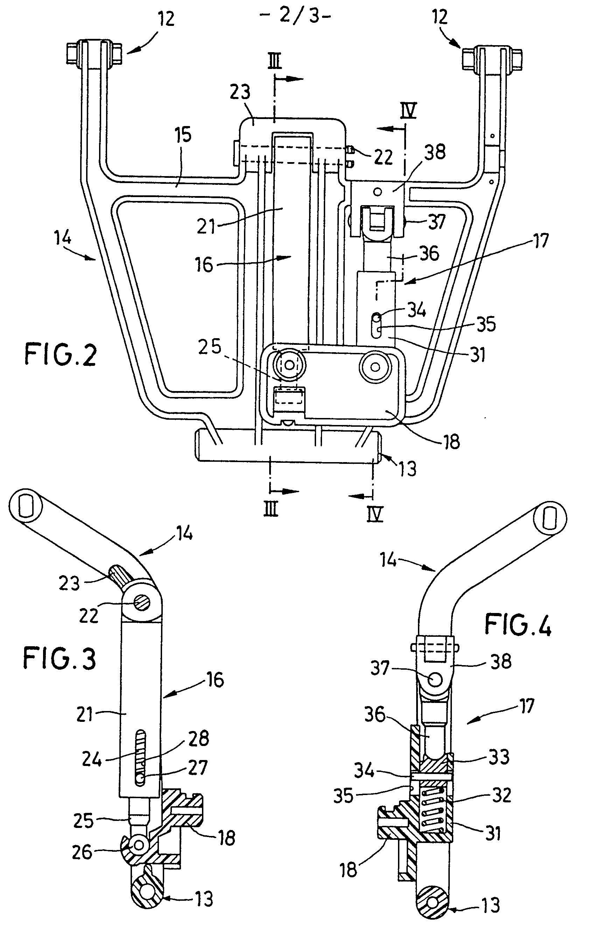

Der Hebelarm 14 ist, wie aus Fig. 2 zu ersehen ist, als ein Dreiecklenker mit breiter oberer Basis ausgebildet und ist mit seinem oberen Drittel, ausgehend von einer Querstrebe 15, schräg nach oben und vorne abgewinkelt. Eine Feder- und Kniehebel-Anordnung 16 bzw. 17 greift einerseits an der Querstrebe 15 und andererseits an einem Abstützbeschlag 18 an der Verkleidung 1 an.

In Verbindung mit den Figuren 2, 3 und 4 wird der Aufbau der Feder- und Kniehebel-Anordnung 16 bzw. 17 noch näher erläutert.

Wie aus Fig. 2, der Ansicht des dreieckförmigen Hebelarmes 14 zu entnehmen ist, ist eine Federanordnung 16 und eine Kniehebel-Anordnung 17 jeweils etwa zwischen der Querstrebe 15 und einem Abstützbeschlag 18 angeordnet.

Die Federanordnung 16 besteht hierbei aus einem Zylinderteil 21, der an seinem oberen Ende über einen Schwenkbolzen 22 an einer Konsole 23 an der Querstrebe 15 des dreieckförmigen Hebelarmes 14 abgestützt ist. Der Zylinderteil 21 nimmt in seinem Inneren eine Schraubendruckfeder 24 auf, die auf einen im unteren Ende des Zylinderteiles angeordneten Kolbenteil 25 einwirkt, dessen unteres Ende über einen Schwenkbolzen 26 in einer entsprechenden Pfanne im Abstützbeschlag 18 abgestützt ist. Um ein unerwünschtes Auseinanderfallen der Federanordnung 16 zu vermeiden, ist zwischen dem Zylinderteil 21 und dem Kolbenteil 25 eine Stift-Schlitz-Sicherung 27/28 angeordnet.

Die Kniehebel-Anordnung 17 besteht aus einem Zylinderteil 31, der fest mit dem Abstützbeschlag 18 verbunden ist. Der Zylinderteil 31 nimmt in seinem Inneren eine Schraubendruckfeder 32 auf, die einen im oberen Ende des Zylinderteiles 31 angeordneten Kolbenteil 33 belastet. Der Kolbenteil 33 nimmt in einer entsprechenden Pfanne einen Kniehebel 36 auf, dessen oberes Ende über einen Schwenkbolzen 37 an einer Konsole 38 an der Querstrebe 15 des dreieckförmigen Hebels 14 abgestützt ist. Um ein Auseinanderfallen der Dämpfer-Anordnung 17 zu vermeiden ist wieder eine Stift-Schlitz-Verbindung 34/35 angeordnet.

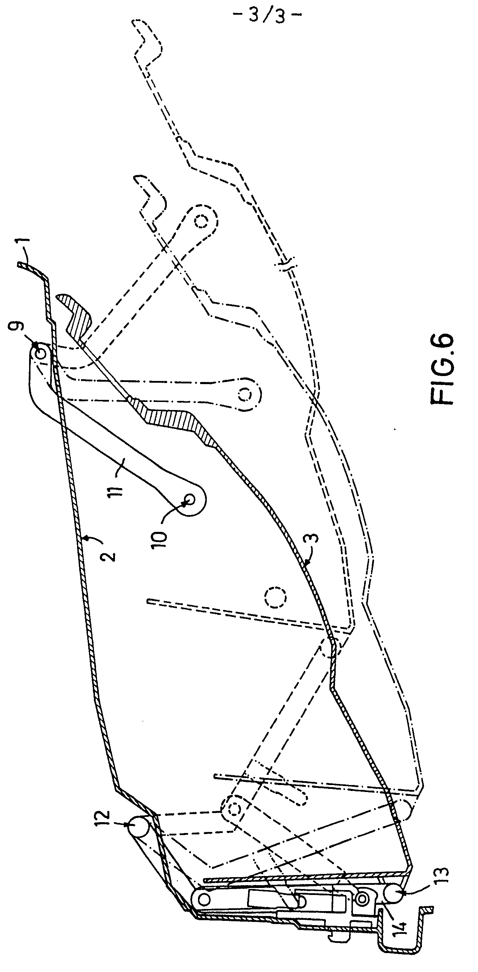

Wie aus Fig. 5 zu ersehen ist, sind an den Seitenwänden 4 des Staubehälters 3 Anschlagteile 19 angeordnet, die mit entsprechenden eingeclipsten Anschlagformteilen 20 an der Verkleidung 1 derart zusammenwirken, dass eine unter Unterstützung der Federanordnung 16 und der Kniehebel-Anordnung 17 eingeleitete Öffnungsbewegung durch das Zusammenwirken der Dämpfer-Anordnung 17 und der Anschlagformteile 20 zunächst in einer minimalen Öffnungslage des Staubehälters 3 begrenzt wird und erst nach Überwinden des durch die Anschlagformteile 20 gebildeten Widerstandes eine weitere Öffnungsbewegung in die volle Öffnungslage des Staubehälters 3 erfolgt.

In Fig. 6 ist die Funktion der Verstauvorrichtung der Erfindung schematisch festgehalten und zwar sind die Umrisse des Staubehälters 3 und die Lager der Feder- und Kniehebel-Anordnung 16 bzw. 17 bei geschlossener Lage in vollen Linien angedeutet, bei nur gering geöffneter Lage sind die Umrisse der Einzelteile in Strich-Punkt-Linien angedeutet und in voll geöffneter Lage sind die Umrisse in gestrichelten Linien angedeutet.

Durch die erfindungsgemässe Verstauvorrichtung kann einerseits, die an die Gestaltung eines Armaturenbrettes eines Kraftfahrzeuges aus Si-cherheitsgründen geforderte glattflächige Ver-kleidung erfüllt werden, ohne dass hierdurch die Zugänglichkeit des Handschuhkastens in unzumutbarer Weise erschwert oder verschlechtert wird, da gemäss der Erfindung der bündig mit der glattflächigen Verkleidung liegende Handschuhkasten beim Öffnen weit dem Benutzer entgegenschwenkt und hierdurch das Ablegen oder Aufsuchen von Gegenständen sehr erleichtert wird.

## Patentansprüche

1. Verstauvorrichtung (3) innerhalb von Verkleidungen (1) in Kraftfahrzeugen, mit einem zum Innern der Verkleidung (1) hin offenen Staubehälter (3), der über einenends an der Verkleidung (1) und anderenends am Staubehälter (3) angelenkten Hebelarmen (11) und einer mit diesen zu-sammenwirkenden Feder- und Dämpfer-Anord-nung (16, 17) federbelastet an ersten Anschlägen (12, 13) in einer mit der Verkleidung (1) bündi-gen, geschlossenen Lage, durch Totpunktüber-windung parallelogrammlenkerartig nach vorne und unten bewegbar und an zweiten Anschlägen (9, 10) in einer gegenüber der Verkleidung vorspringenden, geöffneten Lage festlegbar ist, dadurch gekennzeichnet, dass zwei vordere, seitlich äussere Hebelarme (11) und ein hinterer, parallel zur etwa vertikalen Rückwand (5) des Staubehälters (3) angeordneter, dreieckförmiger Hebelarm (14) vorgesehen sind und eine Feder- und Kniehebel-Anordnung (16 bzw. 17) unten an einem Abstützpunktbeschlag (18) an der Verkleidung (1) und oben an einer Querstrebe (15) des dreieckförmigen Hebelarmes (14) angreift.

2. Verstauvorrichtung nach Anspruch 1, dadurch gekennzeichnet, dass die ersten Anschläge durch übliche Anschlagpuffer (19) für den Staubehälter (3) und die zweiten Anschläge durch an den Seitenwänden (4) des Staubehälters (3) eingeclipste Anschlagformteile (20) gebildet sind, die mit Teilen der Verkleidung (1) zusammenwirken.

3. Verstauvorrichtung nach den Ansprüchen 1 und 2, dadurch gekennzeichnet, dass die Federanordnung (16) im wesentlichen aus einem Zylinderteil (21), einer darin angeordneten Schraubendruckfeder (24) und einem entsprechenden Kolbenteil (25) besteht und der Zylinderteil (21) mit seinem oberen Ende über einen Schwenkbolzen (22) an einer Konsole (23) an einer Querstrebe (15) des dreieckförmigen Hebelarmes (14) und der Kolbenteil (25) über einen Schwenkbolzen (26) in einer entsprechenden Pfanne im Abstützbeschlag (18) abgestützt ist und die Kniehebel-Anordnung (17) aus einem mit dem Abstützbeschlag (18) fest verbundenen Zylinderteil (31) und einem unter der Wirkung einer Schraubendruckfeder (32) stehenden Kolbenteil (33) besteht, der in einer Pfanne das untere Ende eines Kniehebels (36) abstützt, dessen oberes Ende über einen Schwenkbolzen (37) an einer Konsole (38) an der Querstrebe (15) am dreieckförmigen Hebelarm (14) abgestützt ist, werden einerseits die Betätigungskräfte herabgesenkt und anderer-seits zwei unterschiedliche Öffnungslagen bereit-gestellt.

## Revendications

1. Dispositif de rangement (3) logé dans l'habillage (1) d'un véhicule automobile, comprenant un récipient (3) ouvert vers l'intérieur de l'habillage (1), qui, au moyen de bras de leviers (11) articulés, à une extrémité, à l'habillage (1) et, à l'autre extrémité, au récipient (3), et d'un dispositif à ressort et à amortisseur (16, 17) coopérant avec ces bras de leviers, est rappelé élastiquement vers des premières butées (12, 13), dans une position fermée, dans laquelle il est à l'effleurement de l'habillage (1), peut être déplacé vers l'avant et vers l'arrière à la façon d'un parallélogramme articulé, en franchissant un point mort, et peut être immobilisé dans une position ouverte, en saillie par rapport à l'habillage, par des deuxièmes butées (9, 10), caractérisé en ce qu'il comporte deux bras de levier avant (11), latéralement extérieurs, et un bras de levier arrière (14), de forme triangulaire agencé parallèlement à la paroi de fond (5) à peu près verticale du récipient (3), et en ce qu'un dispositif à ressort et à genouillère (16, 17) attaque, en bas, une console de point d'appui (18) prévue sur l'habillage (1) et, en haut, une entretoise transversale (15) du bras de levier triangulaire (14).

2. Dispositif de rangement selon la revendication 1, caractérisé en ce que les premières butées sont formées par des tampons de butée habituels (19) pour le récipient (3) et les deuxièmes butées sont formées par des pièces de butée moulées (20), agrafées sur les parois latérales (4) du récipient (3), qui coopèrent avec des parties de l'habillage (1).

3. Dispositif de rangement selon les revendications 1 et 2, caractérisé en ce que le dispositif à ressort (16) est essentiellement composé d'une partie cylindre (21), d'un ressort de compression hélicoïdal (24) logé dans cette partie et d'une partie piston correspondante (25), la partie cylindre (21) est en appui à son extrémité supérieure, par l'intermédiaire d'un axe d'articulation (22), contre une console (23) prévue sur une entretoise transversale (15) du bras de levier triangulaire (14), et la partie piston (25) prend appui, par l'intermédiaire d'un axe d'articulation (26), dans une cuvette correspondante prévue dans la console d'appui (18), et en ce que le dispositif à genouillère (17) est constitué par une partie cylindre (31) fixée rigidement à la console d'appui (18) et par une partie piston (33) qui est soumise à l'axtion d'un ressort de compression hélicoïdal (32) qui soutient, dans une cuvette, l'extrémité inférieure d'un levier de genouillère (36) dont l'extrémité supérieure est appuyée, par l'intermédiaire d'un axe d'articulation (37), contre une console (38) formée sur l'entretoise transversale (15) du bras de levier triangulaire (14), ainsi d'une part, les forces d'actionnement sont réduites et, d'autre part, deux positions d'ouvertures différentes sont disponibles.

## Claims

1. A storage apparatus (3) inside coverings (1) in motor vehicles, having a storage container (3) which is open towards the interior of the covering (1) and which is movable forwards and downwards in the manner of guides arranged in a parallelogram by overcoming the dead centre in a closed position flush with the covering (1) while being spring-mounted on first stops (12, 13) by way of lever arms (11) articulated on the covering (1) at one end and on the storage container (3) at the other end and by way of a spring and shock-absorber arrangement (16, 17) cooperating therewith and which is lockable on two stops (9, 10) in an opened position projecting from the covering, characterized in that two forward, laterally outer lever arms (11) and a rear, triangularly shaped lever arm (14) disposed parallel to the approximately vertical rear wall (5) of the storage container (3) are provided, and a spring and bell-crank lever arrangement (16 and 17 respectively) engages below on a support point mounting (18) on the covering (1) and above on a transverse bar (15) of the triangularly shaped lever arm (14).

2. A storage apparatus according to Claim 1, characterized in that the first stops are formed by conventional stop buffers (19) for the storage container (3) and the second stops are formed by moulded stop members (20) which are clipped onto the lateral walls (4) of the storage container (3) and which cooperate with parts of the covering (1).

3. A storage apparatus according to Claims 1 and 2, characterized in that the spring arrangement (16) essentially comprises a cylinder portion (21), a helical compression spring (24) disposed therein and a corresponding piston portion (25), and the cylinder portion (21), is supported at its upper end by way of a pivot pin (22) on a bracket (23) on a transverse bar (15) of the triangularly shaped lever arm (14) and the piston portion (25) is supported by way of a pivot pin (26) in a corresponding cup in the support mounting (18), and the bell-crank lever arrangement (17) comprises a cylinder portion (31) rigidly connected to the support mounting (18) and a piston portion (33) which is acted upon by a helical compression spring (32) and which supports in a cup the lower end of a bell-crank lever (36), the upper end of which is supported by way of a pivot pin (37) on a bracket (38) on the transverse bar (15) on the triangularly shaped lever arm (14), [and] on the other hand the actuating forces are reduced and on the other hand two different opening positions are made available.

FIG.1

FIG.5

– 2/3–

FIG.2

FIG.3

FIG.4

FIG.6